# EUROPEAN PATENT SPECIFICATION

(11) **EP 1 137 907 B1**
(45) Date of publication and mention of the grant of the patent: **21.03.2007**
(21) Application number: 99963773.9
(22) Date of filing: 26.11.1999
(51) Int. Cl.: G01B 7/06, G01N 27/90

(54) **USE OF AN ELECTRIC MEASUREMENT COMPONENT**
VERWENDUNG EINES ELEKTRISCHEN MESSELEMENTS
UTILISATION D'UN COMPOSANT DE MESURE ELECTRIQUE

(30) Priority: 26.11.1998 SE 9804080
(43) Date of publication of application: 04.10.2001
(73) Proprietor: Westinghouse Electric Sweden AB, 721 63 Västerås (SE)
(72) Inventor: MAGNUSSON, Kurt- Ake, S-730 50 Skultuna (SE); PEDERSEN, Laust, S-756 53 Uppsala (SE)
(74) Representative: Israelsson, Stefan
(86) International application number: PCT/SE1999/002212
(87) International publication number: WO 2000/034734

(56) References cited:
- EP-A2- 0 506 362
- US-A- 4 107 605
- US-A- 4 593 245
- US-A- 4 706 020
- DATABASE WPI Week 9142, Derwent Publications Ltd., London, GB; AN 1991-309151, XP002947721 & SU 1 610 420 A (EXTRAMURAL ENG INST) 30 November 1990
- DATABASE WPI Week 8619, Derwent Publications Ltd., London, GB; AN 1986-124243, XP002947722 & SU 1 185 217 A (KUBAN AGRIC INST) 15 October 1985

## Description

### BACKGROUND OF THE INVENTION AND PRIOR ART

The present invention concerns a use of an electric measurement component for the measurement of parameters of materials by means of an inductive eddy current method.

US-A-5 017 869 and GB-A-2 187 844 disclose examples of eddy current measurement methods for determining parameters of materials. The first mentioned document concerns primarily the measurement of layer thicknesses with such an eddy current measurement method. The second mentioned document also concerns the measurement of layer thickness, but also the measurement of temperature of thin metal sheets. Eddy current measurement methods may also be used for testing many different properties of a measurement component. For example, it is known that such a measurement method may be used for detecting discontinuities, internal cracks, change in shape or other defects in a measurement object. An advantage with testing by means of an eddy current method is that the measurement object is not destroyed by the testing.

US 4,706,020 describes an eddy current probe that includes a substantially planar, spiral-like, unilaminar coil mounted on an insulative substrate. The document also describes a method of detecting flaws. In the method a bridge circuit is used. The bridge circuit comprises, inter alia, the eddy current probe and a reference coil.

Testing or measuring by means of an eddy current method is briefly described done in the following manner. An electromagnetic alternating field is produced near the measurement object. This alternating field penetrates into the measurement object and causes there (if the measurement object is electrically conductive) eddy currents. These eddy currents produce in their turn an electromagnetic alternating field. This alternating field, or its retroaction on the first mentioned electromagnetic alternating field, may then be detected. The first mentioned electromagnetic alternating field is usually produced by means of a coil. The detection of the alternating field created by the eddy currents also usually takes place by means of a coil.

The Swedish published patent application no. 9602658-8 (and the corresponding US 08/679 624, Jourdain et al) describes a method and a device for determining the thickness of one or more layers arranged on each other on a substrate. Also according to this document, the determination is done by means of an eddy current measurement method.

The above-mentioned documents do not describe the structure of the coil or the coils in detail. The structure of the coil itself has in fact usually not been considered to be particularly decisive for the obtained measurement result. The in practice used coils have normally had a helical shape. Such a helical shaped coil may either be wound in several layers on each other or may also be wound in a single cylinder-shaped layer.

### SUMMARY OF THE INVENTION

The purpose of the present invention is to achieve a use of an electric measurement component which improves the measurement result in an eddy current measurement method.

The electric measurement component used according to the invention is particularly suitable for measuring thin layers. The measurement of such layers may comprise for example the measurement of the layer thickness. Such measurements require a high resolution. If, furthermore, there are several layers on each other with different electric or magnetic properties, it may be difficult to distinguish the layers and thereby be difficult to determine the properties of the individual layers. The inventors of the present invention have thus arrived at the fact that there is a need to form a measurement component which gives a better resolution than those previously used.

The purpose of the invention is achieved by the use defined in claim 1. The measurement component comprises a coil of an electrically conductive material and the coil is formed to comprise at least a first spiral-shaped part.

Mathematically seen, a spiral lies in a plane. A helical curve, on the other hand, has an extension in three dimensions. In practice of course a spiral has a certain extension also in a third dimension (since the spiral must have a certain thickness). Essentially such a spiral may however be considered to lie in a plane. By spiral-shaped part in the present application is thus meant that the spiral is located essentially in a plane. It should however be noted that this plane may in fact be somewhat bent. The plane is thus not a plane in a mathematical sense. For example, it may be an advantage if the spiral-shaped part is somewhat bent in its extension when the measurement object has a corresponding bent surface.

Since the measurement component comprises a coil which is spiral-shaped, a considerably better resolution is achieved when measuring thin layers. The inventors have arrived at the fact that a better resolution is achieved when the height of the coil is not too large compared to the thicknesses of the layers which are to be measured.

According to an embodiment of the measurement component, said first spiral-shaped part along essentially its full length is tangent to an essentially plane boundary surface. Such a boundary surface may be completely plane or also, as has been mentioned above, somewhat bent. A somewhat bent boundary surface may thus be suitable when the measurement object has a correspondingly bent outer surface. According to this embodiment, the coil may be arranged very close to the measurement object, which leads to better measurement accuracy.

According to a further embodiment of the measurement component, the coil has a diameter of less than 5 mm. A coil with this dimension has advantages when measuring smaller areas of a measurement object. It may also be an advantage to use such a small coil when for example the measurement object is somewhat bent. Such a small coil may thereby be plane and still be positioned close to the measurement object. If the radius of curvature of the measurement object is relatively large, such a small coil may in fact, even if it is plane, be considered as being positioned parallel to the measurement object.

According to another embodiment of the measurement component, the first spiral-shaped part has a thickness of between 1 µm and 50 µm. Since the spiral-shaped part has such a limited extension in its thickness direction, this part may be considered as lying essentially in a plane. This small extension in the thickness direction improves the measurement result at least when measuring thin layers.

According to another embodiment of the measurement component, the first spiral-shaped part has at least 3 turns of winding.

Preferably this part has at least 4 and at most 10 turns of winding. Such a limited number of turns of winding brings about that the measurement component may be made small, which has the advantages which have been mentioned above. It should however be noted that in certain applications it may be of interest to have many turns of winding in order to produce an electromagnetic alternating field of a desired strength. It is therefore conceivable that said first spiral-shaped part has many more turns of winding than 10.

According to a further embodiment, the measurement component comprises an electrically insulating support member, wherein said first spiral-shaped part is positioned on one side of the support member. Such a support member contributes to the stability of the measurement component, particularly of the coil. It is also an advantage for the production of the coil if it is formed on such a support member. Since the support member may be formed to have a well-defined plane surface, the coil may thus be arranged essentially in a plane.

According to still another embodiment, the coil comprises also a second spiral-shaped part, wherein the second spiral-shaped part is positioned on the other side of said support member. As have been mentioned above, it may in certain situations be an advantage if the diameter of the coil is small. In order to still achieve a sufficient inductive exchange with the measurement object, it may be essential that the coil comprises a sufficient number of turns of winding. This may be achieved in that the coil comprises two spiral-shaped parts positioned each on its side of a support member. Since the support member may be made thin, the extension of the measurement component crosswise to the plane where the spiral-shaped parts lie may be limited.

According to a further embodiment, the second spiral-shaped part is displaced relative to the first spiral-shaped part such that the electrically conductive material of the second spiral-shaped part is not positioned exactly opposite the electrically conductive material of the first spiral-shaped part. By such a form of the spiral-shaped parts, it has been shown that an electric measurement component with a high resolution may be achieved.

According to another embodiment, the first spiral-shaped part is electrically connected to the second spiral-shaped part. With this construction, the two spiral-shaped parts together thus form a coil. It is however not necessary to the invention that the two parts are electrically connected to each other. It is also conceivable that the two spiral-shaped parts are connected in parallel.

A further embodiment of the measurement component is characterised by contact sections positioned on the support member and connected to the spiral-shaped part or parts positioned on the support member. Through such contact sections, the electric measurement component may in a simple manner be connected to a measurement circuit or to a circuit which generates an electromagnetic alternating field.

The invention concerns the use of an electric measurement component according to any of the above-described embodiments in order to determine at least one parameter of a measurement object by means of an inductive eddy current measurement method. It should be noted that a measurement component according to the above may be used also within other fields than an eddy current method. The measurement component may thus be of use whenever it is an advantage to use a coil which is positioned essentially in a plane. However, as has been described above, the use of the measurement component in an inductive eddy current measurement method has particular advantages.

A use according to the invention is defined in claim 1. By the form of the measurement component, a very high resolution, such as has been described above, is achieved in such a method.

According to an embodiment of the use according to the invention, the parameter or parameters which are determined through the measurement method comprise the thickness of at least one of the layers. Such as has been described above, the measurement component has particular advantages when used for such determination of thickness of layers.

According to a further embodiment of the use according to the invention, the parameter or parameters which are determined through the measurement method comprise the hydride content in the substrate and/or in any one of the layers. It has appeared particularly advantageous to use a measurement component according to the above for determining the hydride content in substrates.

According to a further embodiment of the invention, the measurement object comprises a structural element in a nuclear reactor, wherein said substrate constitutes the material itself for the structural element, said layers constitute an oxide layer on the structural element and a crud layer on the oxide layer. It has appeared particularly advantageous to use the measurement component for determining parameters of such a substrate or such layers in a structural element for a nuclear reactor. Such structural elements may be cladding tubes for fuel rods, control rods, spacers or other details in a nuclear reactor. The structural elements may for example consist of zirconium alloys or hafnium alloys.

According to a further embodiment of the use according to the invention, the measurement object comprises at least one substrate and one or more functional layers on the substrate, wherein through the measurement method the condition of at least one of the functional layer or layers concerning for example wear or corrosion is checked. Such as has already been described above, eddy current measurement methods may with advantage be used for checking defects in materials. In particular it has appeared that a use according to the invention is suitable to determine the degree of wear or corrosion when the measurement object comprises a substrate with one or more layers thereon.

According to still another embodiment of the invention, the measurement object comprises a structural element in a nuclear reactor, wherein said substrate constitutes the material itself for the structural element and said one or more functional layers constitute one or more protective layers on said substrate. It has thus appeared to work very well to use a measurement component according to the above for checking the condition of such protective layers on a structural element in a nuclear reactor. The structural element may for example constitute the cladding tube of a fuel rod, a spacer, which is used inter alia to hold the fuel rods on determined distances from each other, or the casing tube, or the box wall, which encloses a fuel assembly.

Concerning the use according to the invention, the measurement is thus done at at least two different frequencies, for example at three or more different frequencies, preferably at five or more different frequencies. It has in fact appeared that a good accuracy is achieved if the measurement is done at several different frequencies.

According to a preferred embodiment of the use according to the invention, a model is used, which describes a coil for the generation of the electromagnetic alternating field and the constitution of the measurement object and the influence of the measurement object on the electromagnetic alternating field generated by the coil.

According to the invention, a calculation of a resulting combined electromagnetic alternating field is done, which calculation comprises the introduction of predetermined or known values for at least some of the electromagnetic properties of the substrate and/or the layer or layers and the assumption of one or more free parameters, such as the electric conductivity of the substrate and the thickness of the layer or layers positioned on the substrate, and wherein said determination comprises an iterative process according to which the assumed free parameter of parameters are changed until the measured combined electromagnetic field corresponds to the calculated field.

### SHORT DESCRIPTION OF THE DRAWINGS

The present invention will now be explained by means of described embodiments, given as examples, and with reference to the annexed drawings.
Fig 1 shows schematically a view of an electric measurement component which can be used according to the invention.
Fig 2 shows schematically a cross-sectional view of the electric measurement component which is shown in Fig 1.
Fig 3 shows a similar cross-sectional view as Fig 2 but of another embodiment of the component.

### DETAILED DESCRIPTION OF EMBODIMENTS

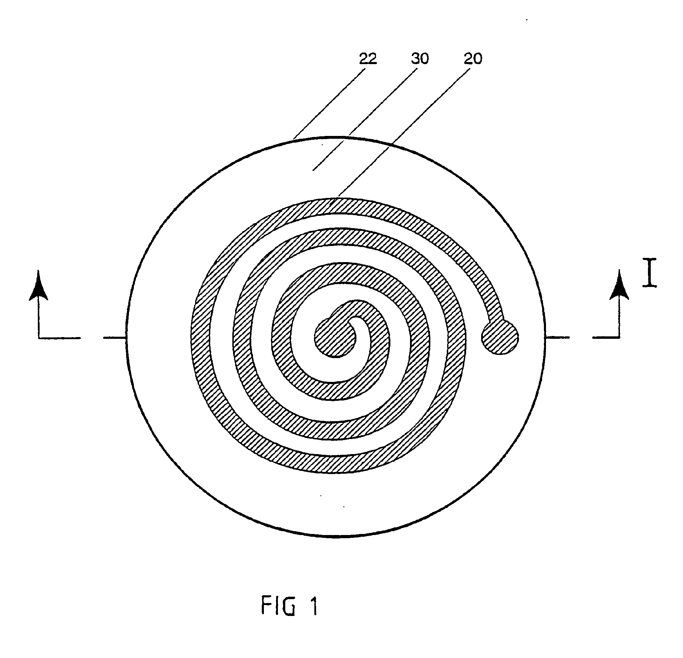

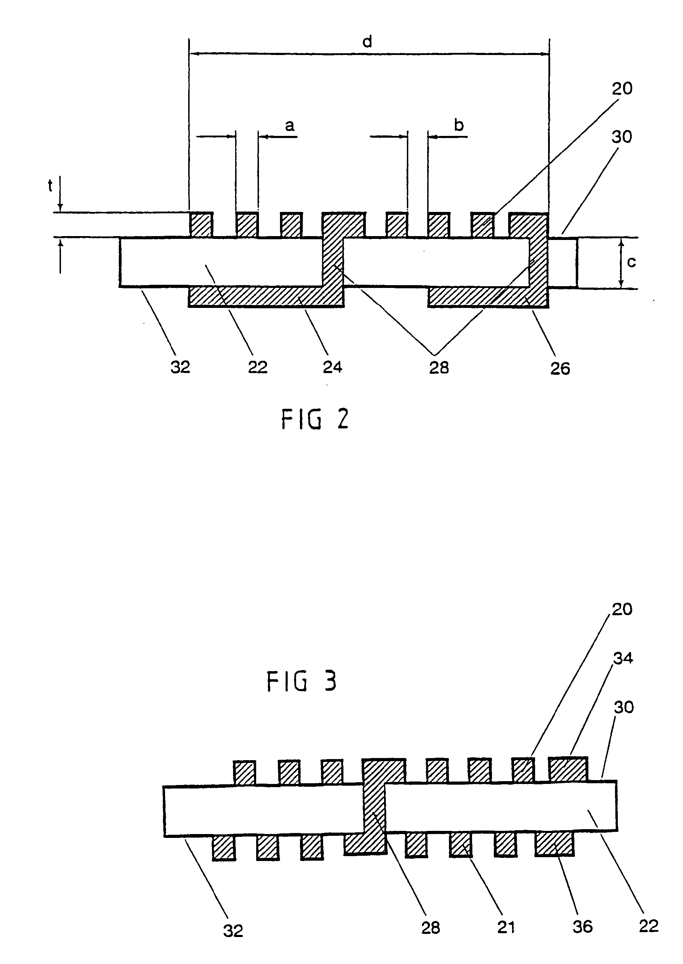

The measurement component will next be described by means of the embodiment which is shown in the figures 1 and 2. Fig 2 is a cross-sectional view of the cross-section which is marked by I in Fig 1. The shown measurement component comprises a coil of an electrically conductive material, wherein the coil is formed to comprise a first spiral-shaped part 20. In the shown embodiment, the coil has only one spiral-shaped part 20. The spiral-shaped part 20 thus constitutes in this embodiment the whole coil. The coil is positioned on a support member 22. This support member 22 is here below also called the substrate. The substrate 22 has a first side 30 and a second side 32. The coil is in this case thus positioned on the first side 30 of the substrate 22. The coil is formed in an electrically conductive material. This material may for example be copper or aluminium, but also other electrically conductive materials may be used. The coil, or the first spiral-shaped part 20, may have a thickness t which is chosen according to the circumstances. Often, it is suitable that this thickness t is between 1 µm and 100 µm. In particular, a thickness t of between 20 µm and 50 µm has appeared to be suitable. A typical such thickness t is about 35 µm.

The coil according to the schematically shown embodiment in Fig 1 has about 3.5 turns of winding (by the number of turns of winding is thus in this application meant how many turns the spiral makes around its central axis). The number of turns of winding depends on the field of use. For certain applications it may be suitable to have a larger number of turns of winding, for example 10-40 turns of winding. Often, it is however an advantage to make the coil as small as possible. It may thereby be suitable that the coil has about 4-10 turns of winding.

The electrically conductive material which forms the coil is hereinafter called the wire. The width a of the wire may also vary depending on the field of use of the coil and depending on the method of production. A suitable value for the width a of the wire may be for example 30 µm - 100 µm. Particularly suitable it has appeared to be if the wire has a width a of about 70 µm. Also the distance between the turns of winding of the wire (which distance is designated by b) depends on the circumstances. A suitable such distance b may be about the same as the width a of the wire, i.e. it may often be suitable that this distance b is about 70 µm. The diameter d of the coil may also be chosen depending on the field of use of the coil. It is often suitable that this diameter d is less than 50 µm. For certain applications, for example for measuring cladding tubes of fuel rods (which is described below), it has appeared suitable that the diameter d of the coil is less than 6 mm, and preferably less than 4 mm.

The substrate 22 may constitute a variety of suitable insulating materials. One such suitable material is polyimide. The thickness c of the substrate 22 may vary to a large extent. In this embodiment with only one spiral-shaped part 20 deposited on one side 30 of the substrate 22, the thickness c of the substrate 22 is often not so important, since the coil may be arranged close to the measurement object. The substrate 22 may however, when desirable, have thickness t of only about 12 µm or less. The substrate 22 may be provided with through-openings 28 (so called vias). These openings 28 may be used to connect the spiral-shaped part 20 to contact sections 24, 26 positioned on the other side 32 of the substrate 22. Through these contact sections 24, 26 the coil may thus be connected for example to a device for generating an electromagnetic alternating field or to a detection device for detecting for example the voltage or the current across the coil.

According to the now described embodiment, the first spiral-shaped part 20 (i.e. in this case the coil) is positioned essentially in a plane. This may be expressed as if the first spiral-shaped part 20 along essentially its full length is tangent to an essentially plane boundary surface. Such a boundary surface may for example constitute one side 30 of the substrate 22 itself or the boundary surface may also be considered to constitute a plane which is tangent to the side of the spiral-shaped part 20 which is located on top in Fig 2. Such as has been mentioned above, such a boundary surface is essentially plane. But when the coil is to be used for measuring a bent measurement object, it may be an advantage if said boundary surface has a curvature which corresponds to the curvature of such a measurement object.

The embodiment according to Fig 3 differs from the embodiment according to Fig 1 and 2 primarily in that the electric measurement component in addition to a first spiral-shaped part 20 also comprises a second spiral-shaped part 21. This embodiment is here only shown in a cross-sectional view but the two spiral-shaped parts 20 and 21 have a shape which is similar to those shown in Fig 1. Each spiral-shaped part 20, 21 may for example have between 3 and 8 turns of winding. According to the embodiment in Fig 3, the second spiral-shaped part 21 is positioned on the other side 32 of the support member 22. The second spiral-shaped part 21 is displaced relative to the first spiral-shaped part 20 such that the electrically conductive turns of winding of the second spiral-shaped part 21 are positioned on positions corresponding to the spaces between the electrically conductive turns of winding of the first spiral-shaped part 20. The first 20 and the second 21 spiral-shaped parts are according to this embodiment electrically connected to each other. The connection constitutes in this case a so-called via 28 through the substrate 22. The two spiral-shaped parts 20 and 21 thus together constitute one coil. Each of the spiral-shaped parts 20 and 21 is, along essentially its full length, tangent to an essentially plane boundary surface in a similar manner as in the embodiment according to Fig 1 and 2. A generator for an electromagnetic alternating field or a detector may suitably be connected to the coil via contact sections 34 and 36. The two spiral-shaped parts 20 and 21 should of course have such a form and should be connected to each other in such a manner that the current which flows through the coil has the effect that these two parts 20 and 21 co-operate in the formation of an electromagnetic field.

It should be noted that the two spiral-shaped parts 20 and 21 also may be separated from each other (i.e. not electrically connected to each other). According to such an embodiment, each of the spiral-shaped parts 20 and 21 should thus have contact sections for being connected to a generator or to a detector. One such contact section should thereby suitably be positioned in the centre of the respective spiral-shaped part and another contact section should be positioned at the periphery. In an embodiment where the two spiral-shaped parts 20, 21 are not electrically connected to each other, one spiral-shaped part 20 may for example be used as an emitter coil, and the other spiral-shaped part 21 may be used as a detector coil.

Although not shown in the figures, it is possible that the spiral-shaped part or parts 20 and 21 are covered by a protective electrically insulating layer of a suitable material.

The electric measurement component may be used for the measurement with an inductive eddy current measurement method. Such a use comprises the measurement of a measurement object which is at least partly electrically conductive and wherein the measurement method comprises the following steps :
positioning the electric measurement component near the measurement object;
applying an electromagnetic alternating field across the electric measurement component such that the coil creates an electromagnetic alternating field which at least partly penetrates the material which is to be determined and creates eddy currents therein, which in their turn produce an electromagnetic field which retroacts on the applied electromagnetic field;
measuring the influence that the field produced by the eddy currents has on the applied field;
wherein said measurement is done in that the frequency of the applied alternating field is set at at least two different values, and that said influence is measured at these frequency values; and wherein the parameter or parameters which are to be determined are calculated on the basis of data obtained through the last mentioned measurement and information about at least some of the electromagnetic properties of the material. Such a use is particularly suited to determine the thickness of one or more layers positioned on a substrate. The principle for such a measurement method is well described in the above-mentioned Swedish patent application. Therefore, this measurement method will not be described here.

It has also appeared that the electric measurement component is suitable to determine the hydride content in an electrically conductive substrate which has one or more layers positioned on the substrate.

The electric measurement component is particularly suited to be used for measuring parameters of a structural element in a nuclear reactor. It has in particular appeared that the measurement component may be used for determining the condition of so-called functional layers on such structural elements. Such functional layers may be very thin, for example only one or a few µm. For measurements on thin layers it is advantageous if the coil has a thickness t of about the same order of magnitude, i.e. only one or a few µm.

By the above mentioned use, for example both the hydride content in the substrate and the thickness of one or more layers positioned on the substrate may be determined through one and the same measurement procedure. Furthermore, both the condition of one or more functional layers and the hydride content in the substrate may be determined with one and the same measurement procedure.

For use of the electric measurement component for eddy current measurements, the measurement component may either function as an emitter coil for producing an electromagnetic alternating field which penetrates into a measurement object or the measurement component may also be used as a receiver coil for detecting the influence of the eddy currents on the generated field. It is also possible that the electric measurement component according to the invention functions both an emitter and a receiver coil.

The electric measurement component may be produced in different manners which are known in connection with for example circuit card or semiconductor production. Such a suitable method of production comprises photolithography. In such a production method, normally a mask is produced which then may be used for producing many measurement components. In this manner many measurement components may be produced to a low cost. In certain measurements (for example when measuring a bent object with an electric measurement component in the form of a plane coil) it is an advantage if the coil is very small. A coil diameter of 2.5 mm may for example be suitable. By using two spiral-shaped parts 20, 21 (one on each side of the substrate 22) a coil with more turns of winding and at the same time a small diameter may thus be produced. It is also possible to have more than two spiral-shaped parts 20, 21. It is thus conceivable to have three or more spiral-shaped parts positioned with insulating substrates or layers between each part. It should be noted that when the electric measurement component comprises two or more spiral-shaped parts 20, 21 with an insulating substrate 22 therebetween, it may be an advantage if the substrate 22 is thin, since in this case the extension of the measurement component crosswise to the plane of the spiral-shaped parts may be small. The thickness c of the substrate 22 may for example be less than 30 µm, preferably less than 20 µm, most preferred about 12 µm. Such a substrate may for example constitute polyimide. It should also be noted that the coil which forms part of a measurement component according to the invention, preferably does not have any helically shaped part (at least not any helically shaped part which constitutes an essential portion of the coil). This is the case both when the coil has only one spiral-shaped part and when the coil has several spiral-shaped parts.

The present invention is not limited to the above embodiments but may be varied and modified within the scope of the following claims.

## Claims

1. Use of an electric measurement component suitable to be used for the measurement of parameters of materials by means of an inductive eddy current method, which measurement component comprises a coil of an electrically conductive material, wherein the coil is formed to comprise at least a first spiral-shaped part (20), which use comprises measurement of a measurement object that is at least partly electrically conductive, wherein the measurement object comprises at least one substrate and one or more thin layers on the substrate, wherein the use comprises a measurement method that comprises the following steps:
positioning the electric measurement component near the measurement object;
applying an electromagnetic alternating field across the electric measurement component such that the coil creates an electromagnetic alternating field which at least partly penetrates the material which is to be determined and creates eddy currents therein, which in their turn produce an electromagnetic field which retroacts on the applied electromagnetic field;
measuring the influence that the field produced by the eddy currents has on the applied field; **characterised in that** said measurement is done **in that** the frequency of the applied alternating field is set at at least two different values, and that said influence is measured at these frequency values; and wherein the parameter or parameters which are to be determined are calculated on the basis of data obtained through the last mentioned measurement and information about at least some of the electromagnetic properties of the material, wherein a calculation of a resulting combined electromagnetic alternating field is done, which calculation comprises the introduction of predetermined or known values for at least some of the electromagnetic properties of the substrate and/or the layer or layers and the assumption of one or more free parameters, such as the electric conductivity of the substrate and the thickness of the layer or layers positioned on the substrate, and wherein said determination comprises an iterative process according to which the assumed free parameter of parameters are changed until the measured combined electromagnetic field corresponds to the calculated field.

2. Use according to claim 1, **characterised in that** said first spiral-shaped part (20) along essentially its full length is tangent to an essentially plane boundary surface.

3. Use according to any of the preceding claims, **characterised in that** the coil has a diameter (d) of less than 5 mm.

4. Use according to any of the preceding claims, **characterised in that** the first spiral-shaped part (20) has a thickness (t) of between 1 µm and 50 µm.

5. Use according to any of the preceding claims, **characterised in that** the first spiral-shaped part (20) comprises at least 3 turns of winding.

6. Use according to claim 5, **characterised in that** the first spiral-shaped part (20) comprises 4 to 10 turns of winding.

7. Use according to any of the preceding claims, wherein the measurement component comprises an electrically insulating support member (22), wherein said first spiral-shaped part (20) is positioned on one side (30) of the support member (22).

8. Use according to claim 7, **characterised in that** the coil also comprises a second spiral-shaped part (21), wherein the second spiral-shaped part (21) is positioned on the other side (32) of said support member (22).

9. Use according to claim 8, **characterised in that** the second spiral-shaped part (21) is displaced relative to the first spiral-shaped part (20) such that the electrically conductive material of the second spiral-shaped part (21) is not positioned exactly opposite the electrically conductive material of the first spiral-shaped part (20).

10. Use according to any of the claims 8 and 9, **characterised in that** the first spiral-shaped part (20) is electrically connected to the second spiral-shaped part (21).

11. Use according to any of the claims 7-10, **characterised by** contact sections (24, 26, 34, 36) positioned on the support member (22) and connected to the spiral-shaped part or parts (20, 21) positioned on the support member.

12. Use according to any one of the claims 1-11, wherein the parameter or parameters which are determined through the measurement method comprise the thickness of at least one of the layers.

13. Use according to any one of the claims 1-11, wherein the parameter or parameters which are determined through the measurement method comprise the hydride content in the substrate and/or in any one of the layers.

14. Use according to any of the claims 12 or 13, wherein the measurement object comprises a structural element in a nuclear reactor, wherein said substrate constitutes the material itself for the structural element, said layers constitute an oxide layer on the structural element and a crud layer on the oxide layer.

15. Use according to any one of the claims 1-11, wherein through the measurement method the condition of at least one of the functional layer or layers concerning for example wear or corrosion is checked.

16. Use according to claim 15, wherein the measurement object comprises a structural element in a nuclear reactor, wherein said substrate constitutes the material itself for the structural element and said one or more functional layers constitute one or more protective layers on said substrate.

## Patentansprüche

1. Verwendung eines elektrischen Messelements, das für die Verwendung bei der Messung von Parametern von Materialien mittels eines induktiven Wirbelstromverfahrens geeignet ist und das eine Spule aus einem elektrisch leitenden Material umfasst, wobei die Spule so geformt ist, dass sie wenigstens einen ersten spiralförmigen Teil (20) umfasst, wobei die Verwendung die Messung eines Messobjekts umfasst, das wenigstens teilweise elektrisch leitend ist, wobei das Messobjekt wenigstens ein Substrat und eine oder mehrere dünne Schichten auf dem Substrat umfasst, wobei die Verwendung ein Messverfahren umfasst, das die folgenden Schritte umfasst:
- Positionieren des elektrischen Messelements nahe an dem Messobjekt;
- Anlegen eines elektromagnetischen Wechselfelds über das elektrische Messelement, so dass die Spule ein elektromagnetisches Wechselfeld erzeugt, das das zu bestimmende Material wenigstens teilweise durchdringt und darin Wirbelströme erzeugt, die ihrerseits ein elektromagnetisches Feld erzeugen, das auf das angelegte elektromagnetische Feld zurückwirkt;
- Messen des Einflusses, den das durch die Wirbelströme erzeugte Feld auf das angelegte Feld hat;
**dadurch gekennzeichnet, dass** die Messung durchgeführt wird, indem die Frequenz des angelegten Wechselfelds auf wenigstens zwei unterschiedliche Werte gesetzt wird und der Einfluss bei diesen Frequenzwerten gemessen wird; und wobei der zu bestimmende Parameter oder die zu bestimmenden Parameter auf der Grundlage von Daten, die durch die letztgenannte Messung erhalten werden, und Informationen über wenigstens einige der elektromagnetischen Eigenschaften des Materials berechnet werden, wobei eine Berechnung eines resultierenden kombinierten elektromagnetischen Wechselfelds durchgeführt wird, wobei die Berechnung die Einführung von vorher bestimmten oder bekannten Werten für wenigstens einige der elektromagnetischen Eigenschaften des Substrats und/oder der Schicht oder Schichten und die Annahme von einem oder mehreren freien Parametern umfasst, z.B. die elektrische Leitfähigkeit des Substrats und die Dicke der auf dem Substrat angeordneten Schicht oder Schichten, und wobei diese Bestimmung einen iterativen Prozess umfasst, gemäß dem der angenommene freie Parameter oder die angenommenen freien Parameter geändert werden, bis das gemessene kombinierte elektromagnetische Feld dem berechneten Feld entspricht.

2. Verwendung gemäß Patentanspruch 1, **dadurch gekennzeichnet, dass** der erste spiralförmige Teil (20) im Wesentlichen entlang seiner gesamten Länge eine Tangente zu einer im Wesentlichen planen Grenzfläche bildet.

3. Verwendung gemäß einem der vorigen Patentansprüche, **dadurch gekennzeichnet, dass** die Spule einen Durchmesser (d) von weniger als 5 mm hat.

4. Verwendung gemäß einem der vorigen Patentansprüche, **dadurch gekennzeichnet, dass** der erste spiralförmige Teil (20) eine Dicke (t) zwischen 1 µm und 50 µm hat.

5. Verwendung gemäß einem der vorigen Patentansprüche, **dadurch gekennzeichnet, dass** der erste spiralförmige Teil (20) wenigstens 3 Windungen aufweist.

6. Verwendung gemäß Patentanspruch 5, **dadurch gekennzeichnet, dass** der erste spiralförmige Teil (20) 4 bis 10 Windungen aufweist.

7. Verwendung nach einem der vorigen Patentansprüche, bei der das Messelement ein elektrisch isolierendes Stützglied (22) aufweist, wobei der erste spiralförmige Teil (20) an der einen Seite (30) des Stützglieds (22) angeordnet ist.

8. Verwendung gemäß Patentanspruch 7, **dadurch gekennzeichnet, dass** die Spule auch einen zweiten spiralförmigen Teil (21) aufweist, wobei der zweite spiralförmige Teil (21) an der anderen Seite (32) des Stützglieds (22) angeordnet ist.

9. Verwendung gemäß Patentanspruch 8, **dadurch gekennzeichnet**, der zweite spiralförmige Teil (21) bezüglich des ersten spiralförmigen Teils (20) so verschoben ist, dass das elektrisch leitende Material des zweiten spiralförmigen Teils (21) nicht genau gegenüber dem elektrisch leitenden Material des ersten spiralförmigen Teils (20) angeordnet ist.

10. Verwendung gemäß einem der Patentansprüche 8 und 9, **dadurch gekennzeichnet, dass** der erste spiralförmige Teil (20) elektrisch mit dem zweiten spiralförmigen Teil (21) verbunden ist.

11. Verwendung gemäß einem der Patentansprüche 7-10, **gekennzeichnet durch** Kontaktabschnitte (24, 26, 34, 36), die an dem Stützglied (22) angeordnet und mit dem spiralförmigen Teil oder den spiralförmigen Teilen (20, 21), die an dem Stützglied angeordnet sind, verbunden sind.

12. Verwendung gemäß einem der Patentansprüche 1-11, bei der der Parameter oder die Parameter, die durch das Messverfahren bestimmt werden, die Dicke wenigstens einer der Schichten umfassen.

13. Verwendung gemäß einem der Patentansprüche 1-11, bei der der Parameter oder die Parameter, die durch das Messverfahren bestimmt werden, den Hydridgehalt in dem Substrat und/oder in einer der Schichten umfassen.

14. Verwendung gemäß einem der Patentansprüche 12 oder 13, bei der das Messobjekt ein Strukturelement in einem Kernreaktor umfasst, wobei das Substrat das eigentliche Material für das Strukturelement bildet und die Schichten eine Oxidschicht auf dem Strukturelement und eine Fremdstoffschicht auf der Oxidschicht bilden.

15. Verwendung gemäß einem der Patentansprüche 1-11, bei der durch das Messverfahren der Zustand wenigstens der Funktionsschicht oder einer der Funktionsschichten geprüft wird, beispielsweise bezüglich Abnutzung oder Korrosion.

16. Verwendung gemäß Patentanspruch 15, bei der das Messobjekt ein Strukturelement in einem Kernreaktor umfasst, wobei das Substrat das eigentliche Material für das Strukturelement bildet und die eine Funktionsschicht oder die mehreren Funktionsschichten eine oder mehrere Schutzschichten auf dem Substrat bilden.

## Revendications

1. Utilisation d'un composant de mesure électrique apte à être utilisé pour la mesure de paramètres de matériaux au moyen d'un procédé par courant de Foucault inductif, lequel composant de mesure comprend une bobine d'un matériau conducteur d'électricité, la bobine étant réalisée de manière à comprendre au moins une première partie en forme de spirale (20), laquelle utilisation comprend la mesure d'un objet de mesure qui est au moins partiellement conducteur d'électricité, l'objet de mesure comprenant au moins un substrat et une ou plusieurs couches minces sur le substrat, l'utilisation comprenant un procédé de mesurage qui comprend les étapes suivantes :
● positionnement du composant de mesure électrique près de l'objet de mesure;
● application d'un champ électromagnétique alternatif aux bornes du composant de mesure électrique de telle façon que la bobine crée un champ électromagnétique alternatif qui, au moins partiellement, pénètre le matériau qui est à déterminer et crée des courants de Foucault à l'intérieur de celui-ci, lesquels à leur tour produisent un champ électromagnétique qui rétroagit sur le champ électromagnétique appliqué ;
● mesure de l'influence que le champ produit par les courants de Foucault exerce sur le champ appliqué ;
**caractérisée en ce que** ladite mesure est effectuée de telle façon que la fréquence du champ alternatif appliqué soit établie à au moins deux valeurs différentes et que ladite influence soit mesurée à ces valeurs de fréquence ; et dans laquelle le paramètre ou les paramètres qui sont à déterminer sont calculés sur la base de données obtenues au moyen de la dernière mesure mentionnée et d'informations concernant au moins certaines des propriétés électromagnétiques du matériau, dans lesquelles un calcul d'un champ électromagnétique alternatif combiné résultant étant effectué, lequel calcul comprend l'introduction de valeurs prédéterminées ou connues pour au moins certaines des propriétés électromagnétiques du substrat et/ou de la couche ou des couches et l'hypothèse d'un ou plusieurs paramètres libres, tels que la conductivité électrique du substrat et l'épaisseur de la couche ou des couches positionnées sur le substrat, et, dans laquelle ladite détermination comprend un processus itératif selon lequel le paramètre ou les paramètres libres pris par hypothèse sont modifiés jusqu'à ce que le champ électromagnétique combiné mesuré corresponde au champ calculé.

2. Utilisation selon la revendication 1, **caractérisée en ce que** ladite première partie en forme de spirale (20), sur essentiellement toute sa longueur, est tangente à une surface limite essentiellement plane.

3. Utilisation selon l'une quelconque des revendications précédentes, **caractérisée en ce que** la bobine a un diamètre (d) de moins de 5 mm.

4. Utilisation selon l'une quelconque des revendications précédentes, **caractérisée en ce que** la première partie en forme de spirale (20) possède une épaisseur (t) comprise entre 1 µm et 50 µm.

5. Utilisation selon l'une quelconque des revendications précédentes, **caractérisée en ce que** la première partie en forme de spirale (20) comprend au moins 3 tours d'enroulement.

6. Utilisation selon la revendication 5, **caractérisée en ce que** la première partie en forme de spirale (20) comprend 4 à 10 tours d'enroulement.

7. Utilisation selon l'une quelconque des revendications précédentes, dans laquelle le composant de mesure comprend un élément de support isolant électriquement (22), ladite première partie en forme de spirale (20) étant positionnée d'un côté (30) de l'élément de support.

8. Utilisation selon la revendication 7, **caractérisée en ce que** la bobine comprend aussi une seconde partie en forme de spirale (21), dans laquelle la seconde partie en forme de spirale (21) est positionnée de l'autre côté (32) dudit élément de support (22).

9. Utilisation selon la revendication 8, **caractérisée en ce que** la seconde partie en forme de spirale (21) est décalée par rapport à la première partie en forme de spirale (20) de telle façon que le matériau conducteur d'électricité de la seconde partie en forme de spirale (21) n'est pas positionné exactement en face du matériau conducteur d'électricité de la première partie en forme de spirale (20).

10. Utilisation selon l'une quelconque des revendications 8 et 9, **caractérisée en ce que** la première partie en forme de spirale (20) est connectée électriquement à la seconde partie en forme de spirale (21).

11. Utilisation selon l'une quelconque des revendications 7 à 10, **caractérisée par** des sections de contact (24, 26, 34, 36) positionnées sur l'élément de support (22) et connectées à la partie ou aux parties en forme de spirale (20, 21) positionnées sur l'élément de support.

12. Utilisation selon l'une quelconque des revendications 1 à 11, dans laquelle le paramètre ou les paramètres qui sont déterminés par le procédé de mesure comprennent l'épaisseur d'au moins une des couches.

13. Utilisation selon l'une quelconque des revendications 1 à 11, dans laquelle le paramètre ou les paramètres qui sont déterminés par le procédé de mesure comprennent la teneur en hydrure du substrat et/ou de l'une quelconque des couches.

14. Utilisation selon l'une quelconque des revendications 12 ou 13, dans laquelle l'objet de la mesure comprend un élément de structure d'un réacteur nucléaire, ledit substrat constituant le matériau lui-même de l'élément de structure, lesdites couches constituant une couche d'oxyde sur l'élément de structure et une couche de déchets de corrosion sur la couche d'oxyde.

15. Utilisation selon l'une quelconque des revendications 1 à 11, dans laquelle, par le procédé de mesure, l'état d'au moins une de la couche ou des couches fonctionnelles, en termes par exemple d'usure ou de corrosion, est contrôlé.

16. Utilisation selon la revendication 15, dans laquelle l'objet de mesure comprend un élément de structure d'un réacteur nucléaire, ledit substrat constituant le matériau lui-même de l'élément de structure et ladite ou lesdites couches fonctionnelles constituant une ou plusieurs couches protectrices sur ledit substrat.
